# EUROPEAN PATENT SPECIFICATION

(11) **EP 3 402 720 B1**
(45) Date of publication and mention of the grant of the patent: **30.12.2020**
(21) Application number: 17704393.2
(22) Date of filing: 16.01.2017
(51) Int. Cl.: B64D 11/06

(54) **SEALABLE LIFE VEST STOWAGE DEVICE**
VERSCHLIESSBARE AUFBEWAHRUNGSVORRICHTUNG FÜR SCHWIMMWESTEN
DISPOSITIF DE RANGEMENT DE GILET DE SAUVETAGE POUVANT ÊTRE SCELLÉ

(30) Priority: 15.01.2016 GB 201600820; 25.01.2016 GB 201601333
(43) Date of publication of application: 21.11.2018
(73) Proprietor: Servecorp Limited, West Sussex RH11 0TG (GB)
(72) Inventor: WHITE, Noel Gregory Philip, Haywards Heath West Sussex RH16 4QT (GB)
(74) Representative: Gray, Peter John Bracey
(86) International application number: PCT/EP2017/050783
(87) International publication number: WO 2017/121895

(56) References cited:
- EP-A2- 2 636 332
- WO-A1-2015/145121
- US-A1- 2015 034 641

## Description

### Field of the Disclosure

This disclosure relates to a sealable life vest stowage device usable for stowing a life vest on a commercial passenger aircraft.

### Background to the Disclosure

Aviation regulations require commercial passenger aircraft to carry a life vest (or "life jacket") for each passenger. The life vest must be accessible to the passenger for use in the event of an emergency. In order to comply with these regulations, a life vest is usually stowed under each seat in a commercial passenger aircraft.

Life vest stowage devices are available for stowing life vests under aircraft seats. Regulations require that the life vest should remain stowed in its life vest stowage device in the event of the aircraft suffering an impact of up to 16G. On the other hand, the life vest stowage device must also allow for easy removal of a life vest in the event of an emergency.

Security requirements for life vest stowage devices are becoming increasingly stringent, and airlines are seeking ways to meet the security requirements with minimum time and expense. This has led to life vest stowage devices being sealed shut, so that visual inspection of the seal can determine if a life vest stowage device has been accessed and the need to thoroughly search inside life vest stowage devices is circumvented.

Increasingly complex closures and security seals have been proposed. In particular, the use of seals incorporating Radio Frequency Identification (RFID) technology has been proposed in order to further reduce inspection time. RFID technology offers the prospect of avoiding even visual inspection life vest stowage devices. Each life vest stowage device is sealed using a RFID seal that ceases to operate if the seal is broken. An RFID reader can then be used to establish very quickly if any of the RFID seals on an aircraft are inoperable, and to identify the location of the offending life vest stowage
device.

Although the benefits of this type of technology are appreciated, a need remains for life vest stowage devices with simple sealing mechanisms. In a similar field to the present invention, US 2015/0034641 describes a life jacket case that is fitted with an external security tag intended to indicate to an observer whether or not the cover has been opened by breaking when the cover is opened.

### Summary of the Disclosure

According to one aspect of the disclosure, there is provided a life vest stowage device comprising:
a receptacle defining an interior volume;
an opening through which the interior volume is accessible from outside of the receptacle;
a first tab having a first tab aperture;
a closure flap moveable between an unfolded position when the life vest stowage device is in an open configuration, in which unfolded position the opening is uncovered, and a folded position when the life vest stowage device is in a closed configuration, in which folded position the closure flap at least partially covers the opening and the first tab is exposed through the closure flap to allow access to the first tab aperture from an outer side of the closure flap;
a pull strap extending from the interior volume through the opening so as to be able to pass over the outer side of the closure flap, the pull strap having a pull strap aperture; characterised in that,
in the closed configuration, the pull strap is securable to the first tab from the outer side of the closure flap by a frangible seal extending between the pull strap aperture and the first tab aperture such that the closure flap can only be moved to the unfolded position by moving the pull strap aperture and the first tab aperture away from one another so as to break the frangible seal.

In the closed configuration, a portion of the pull strap may lie between the closure flap and the receptacle such that pulling an end of the pull strap distal from the receptacle away from the receptacle causes the closure flap to move to the unfolded position.

The frangible seal may comprise a seal head and an elongate member, wherein the elongate member cooperates with the seal head to form a closed loop, and wherein breaking the frangible seal involves breaking the closed loop. The elongate member may be attached at one end to the seal head and the seal head may have a seal head aperture through which the other end of the elongate member can be inserted to form the loop. The elongate member and the seal head aperture may form a ratchet arranged such that the elongate member resists withdrawal from the side of the seal head aperture via which it is inserted. The elongate member resists withdrawal from the side of the seal head aperture via which it is inserted sufficiently that the closed loop breaks by the elongate member breaking rather than withdrawing from the seal head aperture.

The frangible seal is polypropylene or nylon.

The closure flap may have a first closure flap aperture through which the first tab is exposed in the closed configuration. Preferably, the life vest stowage device has a second tab having a second tab aperture, wherein, in the closed configuration, the second tab aperture is exposed through the closure flap to allow access to the second tab aperture from the outer side of the closure flap and the pull strap is securable to the second tab from the outer side of the closure flap by the frangible seal additionally extending between the pull strap aperture and the second tab aperture such that the closure flap can only be moved to the unfolded position by moving the pull strap aperture away from both the first tab aperture and the second tab aperture so as to break the frangible seal. The closure flap may have a second closure flap aperture through which the second tab is exposed in the closed configuration.

In the closed configuration, the pull strap may be locatable between the first tab and second tab.

Preferably, the life vest stowage device comprises an inner flap located towards the interior volume of the receptacle inward in relation to the closure flap, the inner flap being foldable between the unfolded position when the life vest stowage device is in the open configuration, in which unfolded position the opening is uncovered, and a folded position when the life vest stowage device is in the closed configuration, in which folded position the inner flap at least partially covers the opening.

Optionally, the life vest stowage device has a pocket into which the inner flap is insertable in the folded configuration.

Optionally, the life vest stowage device has a pocket into which the closure flap is insertable in the folded configuration.

Optionally, the life vest stowage device comprises first and second tab receiving apertures, the first tab having a tab head wider than the first tab receiving aperture and a neck narrower than the first tab receiving aperture, and the second tab having a tab head wider than the second tab receiving aperture and a neck narrower than the second tab receiving aperture.

The life vest stowage device may comprise a first material and the closure flap may comprise a second material. The second material may be stiffer than the first material. In one example, the second material is a polycarbonate film. Specific embodiments are described below, by way of example only, with reference to the accompanying drawings.

### Brief Description of Drawings

Figure 1 is a perspective view of a life vest stowage device is a closed configuration.
Figure 2 is a cross-sectional view of the life vest stowage device in the closed configuration, including a close up view of an end of the life vest stowage device where a closure flap is provided.
Figure 3 is a perspective view of the life vest stowage device in an open configuration.
Figure 4 is a cross-sectional view of the life vest stowage device in the open configuration, including a close up view of the end of the life vest stowage device where the closure flap is provided.
Figure 5 is a front view of a frangible seal, first and second tabs and a pull strap of the life vest stowage device.
Figure 6 is a front view of an alternative frangible seal.
Figure 7 is a front view of the alternative frangible seal in position on the first and second tabs.

### Detailed Description of Preferred Embodiments

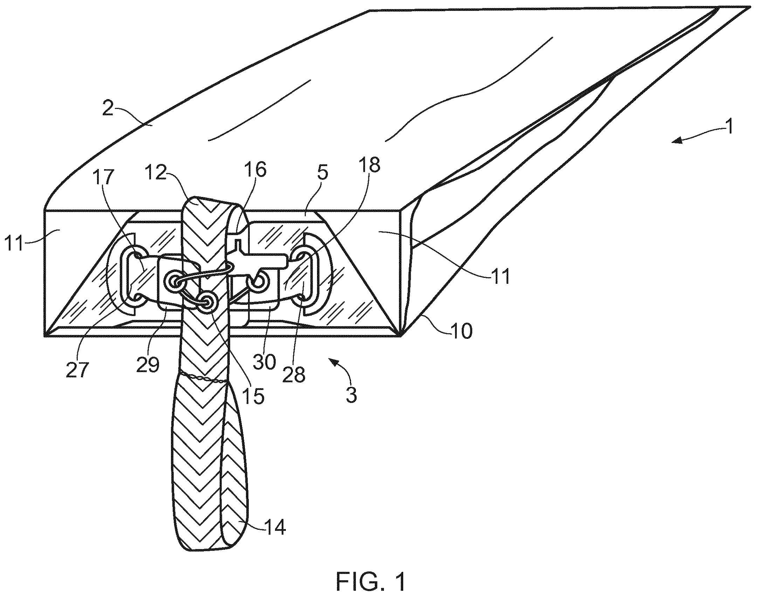

Referring to Figures 1 to 5, a life vest stowage device 1 according to an embodiment of the disclosure comprises a receptacle 2 with an receptacle opening 3. In this embodiment, the life vest stowage device 1 is suitable for use on a commercial passenger aircraft. As such, the receptacle 2 is suitable for housing a life vest 4 and the receptacle opening 3 allows the life vest 4 to be inserted into and removed from the receptacle 2. The life vest stowage device 1 is securable under an aircraft seat, and straps or other mountings (not shown) are provided on the life vest stowage device 1 for this purpose, but are omitted from the accompanying drawings for clarity. Conventionally, three different sizes of life vest 4 are specified for use on commercial passenger aircraft. When folded for stowing, a small life vest 4 is approximately 24cm long, 13cm wide and 6cm deep; a medium life vest 4 is approximately 22cm long, 16cm wide and 6cm deep and a large life vest 4 is approximately 22cm long, 20cm wide and 7cm deep. Typically, the receptacle 2 is large enough to be able to house a large life vest 4 snugly.

In this embodiment, the receptacle 2 is a bag. The bag comprises two layers of a first material secured to one another at their edges, except at one end on the receptacle 2 where the edges of the layers are left unattached to one another to provide the receptacle opening 3. The receptacle opening 3 extends across the entire width of the receptacle 2. In this embodiment, the two rectangles of the first material are secured to one another by stitching, but other methods of securing the layers of the first material to one another can be used, such as joining with glue or by heat treatment. The first material is a cloth. The cloth is typically fire resistant, and in this embodiment is a polyamide substrate with polyurethane coating and a fluorocarbon finish. In order to accommodate a large life vest 4 snugly, the bag has a length L of approximately 26cm and a width W of approximately 24cm. The bag is flat when empty, and accommodates the life vest 4 by deforming to a required height, in a direction normal to the plane defined by its length and width. In other embodiments, the bag is of a different construction or has different dimensions. It is also possible for the receptacle 2 to be a box that is substantially non-deformable instead of a bag.

The life vest stowage device 1 has an inner flap 5 extending outwardly from a first side of the receptacle opening 3. In this embodiment, the inner flap 5 is contiguous with a first side wall of the receptacle 2 on the first side of the receptacle opening 3. The inner flap 5 may be integral with the receptacle 2, for example being the same material as the receptacle 2. More specifically, the inner flap 5 may be part of one of the two layers of the first material that are secured to one another to form the receptacle 2. However, in this embodiment, the inner flap 5 comprises a strip of the first material secured to the first side wall of the receptacle 2 on the first side of the receptacle opening 3.

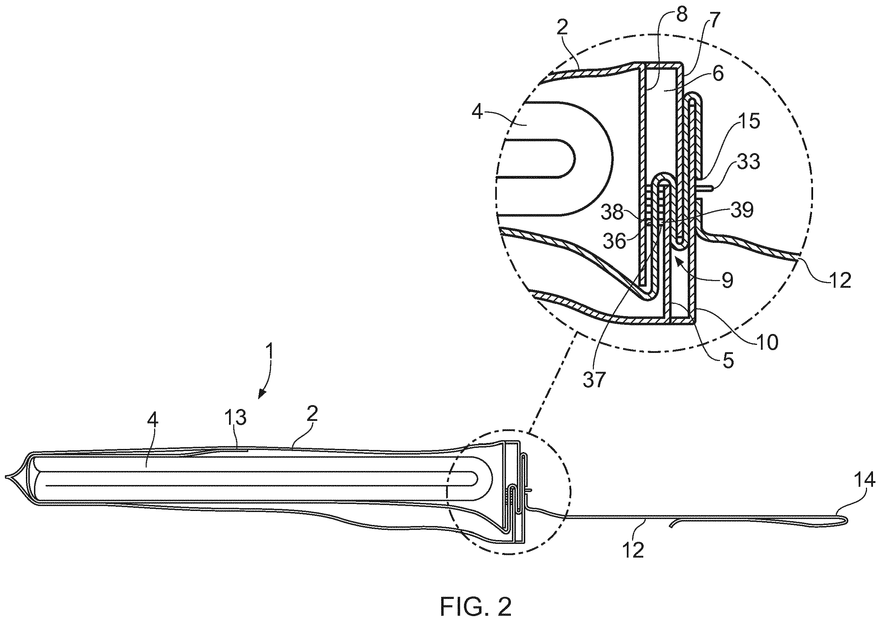

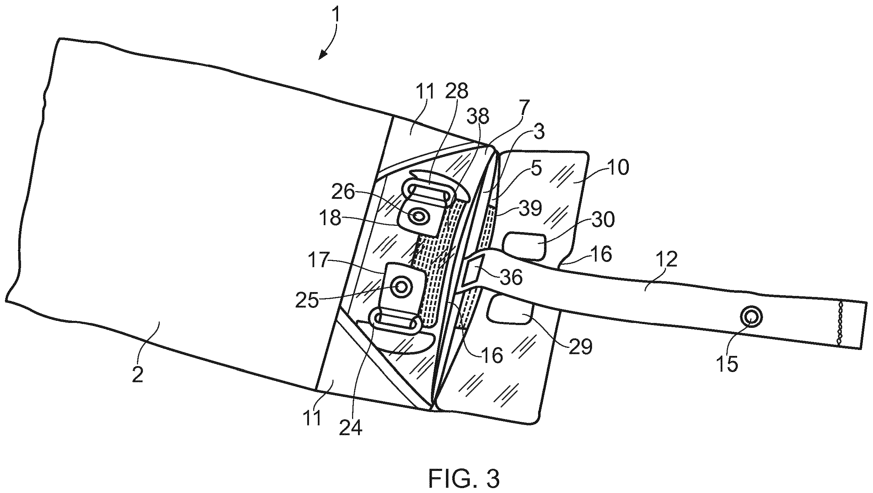

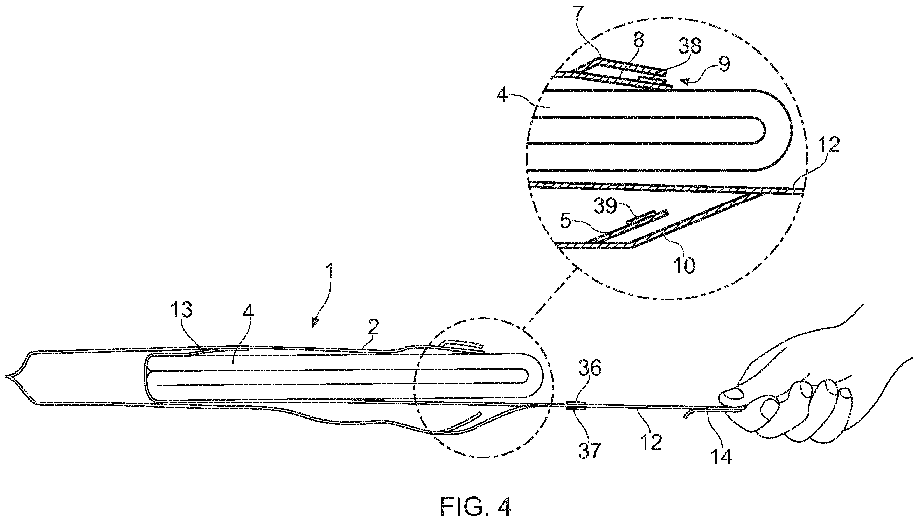

The life vest stowage device 1 has a closed configuration, as shown in Figures 1 and 2, and an open configuration, as shown in Figures 3 and 4. With the life vest stowage device 1 in the closed configuration, the inner flap 5 is in a folded position. In the folded position, the inner flap 5 at least partially covers the receptacle opening 3. In this embodiment, the inner flap 5 extends across the entire width of the receptacle 2. In other words, the inner flap 5 has the same width as the receptacle 2. This means that, in the folded position, the inner flap 5, in combination with a second side wall of the receptacle 2 on a second side of the receptacle opening 3, opposite to the first side, entirely blocks the receptacle opening 3.

With the life vest stowage device 1 in the open configuration, the inner flap 5 is in an unfolded position. In the unfolded position, the inner flap 5 does not obstruct the receptacle opening 3. Specifically, in this embodiment, the inner flap 5 is generally parallel to the first side wall of the receptacle 2. The inner flap 5 can be moved between the unfolded and the folded positions. The movement occurs by folding and unfolding the inner flap 5 along the edge of the inner flap 5 that is attached to the receptacle 2.

In this embodiment, an edge of the inner flap 5 distal to the receptacle 2 is shorter than an edge of the inner flap 5 that is attached to the receptacle 2. As such, the inner flap 5 is trapezoidal in shape.

The life vest stowage device 1 has an inner flap pocket 6 on the second side of the receptacle opening 3. A pocket side wall 7 is secured to a portion 8 of the second side wall of the receptacle 2 on the second side of the receptacle opening 3. The pocket side wall 7 is secured along its edges to the portion 8 of the second side wall of the receptacle 2, except at an edge of the pocket side wall 7 closest to the receptacle opening 3, which edge is left unattached to provide a pocket opening 9. The inner flap pocket 6 extends across the entire width of the receptacle 2, and has a depth similar to or greater than the length of the inner flap 5, that is the distance between the edge of the inner flap 5 distal to the receptacle 2 and the edge of the inner flap 5 attached to the receptacle 2. The inner flap 5 can be inserted into the inner flap pocket 6 in the folded position.

The life vest stowage device 1 also a closure flap 10 extending outward from the first side of the receptacle opening 3, which is the same side of the receptacle opening 3 as the inner flap 5. In this embodiment, the closure flap 10 is contiguous with the first side wall of the receptacle 2 on the first side of the receptacle opening 3. The closure flap 10 may be integral with the receptacle 2, for example being the same material as the receptacle 2. More specifically, the closure flap 10 may be part of one of the two layers of the first material that are secured to one another to form the receptacle 2. In this case, the inner flap 5 may be a separate strip of material. However, in this embodiment, the closure flap 10 comprises a strip of a second material secured to the first side wall of the receptacle 2 on the first side of the receptacle opening 3. The second material is stiffer than the first material. In this embodiment, the second material a polycarbonate film, such as Lexan®.

With the life vest stowage device 1 in the closed configuration, the closure flap 10 is in a folded position. In the folded position, the closure flap 10 at least partially covers the receptacle opening 3. In this embodiment, the closure flap 10 extends across the entire width of the receptacle 2. In other words, the closure flap 10 has the same width as the receptacle 2. In the folded position, the closure flap 10, in conjunction with the second side wall of the receptacle 2 on the second side of the receptacle opening 3, entirely blocks the receptacle opening 3.

The closure flap 10 is located outward of the inner flap 5, in relation to the receptacle opening 3. This means that, in the closed configuration, the closure flap 10 at least partially covers the inner flap 5. In this embodiment, the closure flap 10 has a length between an edge of the closure flap 10 distal to the receptacle 2 and an edge of the closure flap 10 attached to the receptacle 2 greater than the length of the inner flap 5 between the edge of the inner flap 5 distal to the receptacle 2 and the edge of the inner flap 5 attached to the receptacle 2. This allows the closure flap 10 to cover the inner flap 5 entirely in the closed configuration. The closure flap 10 is also arranged to at least partially cover the pocket side wall 7 in the folded position.

With the life vest stowage device 1 in the open configuration, the closure flap 10 is in an unfolded position. In the unfolded position, the closure flap 10 does not obstruct the receptacle opening 3. Specifically, in this embodiment, the closure flap 10 is generally parallel to the first side wall of the receptacle 2 on the first side of the receptacle opening 3 in the unfolded position. The closure flap 10 is arranged to be moved between the unfolded and the folded positions. The movement occurs by folding and unfolding the closure flap 10 along the edge of the closure flap 10 that is attached to the receptacle 2.

The receptacle 2 has two closure flap pockets 11 for accommodating the closure flap 10 in the folded position, although it will be appreciated than only one closure flap pocket 11 is useful in itself and, in other embodiments, only one pocket 11 is provided. The closure flap pockets 11 are located at corners of the pocket side wall 7 distal to the receptacle opening 3. The closure flap pockets 11 are triangular and are located on an outwardly facing of the pocket side wall 7. The closure flap pockets 11 are arranged such that corners of the closure flap 10 distal to the receptacle opening 3 are insertable into the pockets 11 when the closure flap 10 in the folded position. The pockets 11 retain the closure flap 10 in the folded position, whilst at the same time allowing the closure flap 10 to be easily releasable from the pockets 11 for moving to the unfolded position. A pull strap 12 is provided that extends from the interior volume of the receptacle 2, through the receptacle opening 3 to the outside of the receptacle 2. The pull strap 12 is attached at one end to an inside surface of the receptacle 2 at an attachment point 13.

The attachment point 13 is positioned at a location along the length of the receptacle 2, such that the distance between the attachment point 13 and the receptacle opening 3 is less than the length of the life vest 4 the life vest stowage device 1 is intended to accommodate. A loop 14 is provided at the other end of the pull strap 12, to improve the ease with which a user can grasp the pull strap 12. The pull strap 12 also has a pull strap aperture 15. The pull strap aperture 15 is provided part way alone the length of the pull strap 12, as described in more detail below.

With the life vest stowage device 1 in the open configuration, the pull strap 12 extends from the attachment point 13 out through the receptacle opening 3. The attachment point 13 is located on an inside surface of the second side wall of the receptacle 2. With the life vest 4 fully inserted into the receptacle 2, the pull strap 12 is arranged to run from the attachment point 13 towards the rear of the receptacle 2, around the life vest 4, then along the inside surface of the receptacle 2 opposite to the inside surface on which the attachment point is provided 13, and out through the receptacle opening 3.

With the life vest stowage device 1 in the closed configuration, the pull strap 12 extends out through the receptacle opening 3 via the inner flap pocket 6. More specifically, the pull strap 12 passes through the receptacle opening 3, into the inner flap pocket 6, between the portion 8 of the second side wall forming the inner flap pocket 6 and the inner flap 5 located in the inner flap pocket 6, around the edge of the inner flap 5 distal to the receptacle 2 (in the unfolded position), between the inner flap 5 and the pocket side wall 7, around an edge of the pocket side wall 7 at the pocket opening 9, between the pocket side wall 7 and the closure flap 10, around the edge of the closure flap 10 distal to the receptacle 2 (in the unfolded position) and over an outwardly facing surface of the closure flap 10.

The pocket side wall 7 and closure flap 10 each have a guide 16 for the pull strap 12. The guide 16 of the pocket side wall 7 comprises a recess along the edge of the pocket side wall 7 at the pocket opening 9. The guide 16 of the closure flap 10 comprises a recess along the edge of the closure flap 10 distal to the receptacle 2. The guides 16 are provided centrally with respect the width of the life vest stowage device 1, so as to cause the pull strap 12 to pass out through the receptacle opening 3, with the life vest stowage device 1 in the closed configuration, at a location central to the width of the receptacle opening 3.

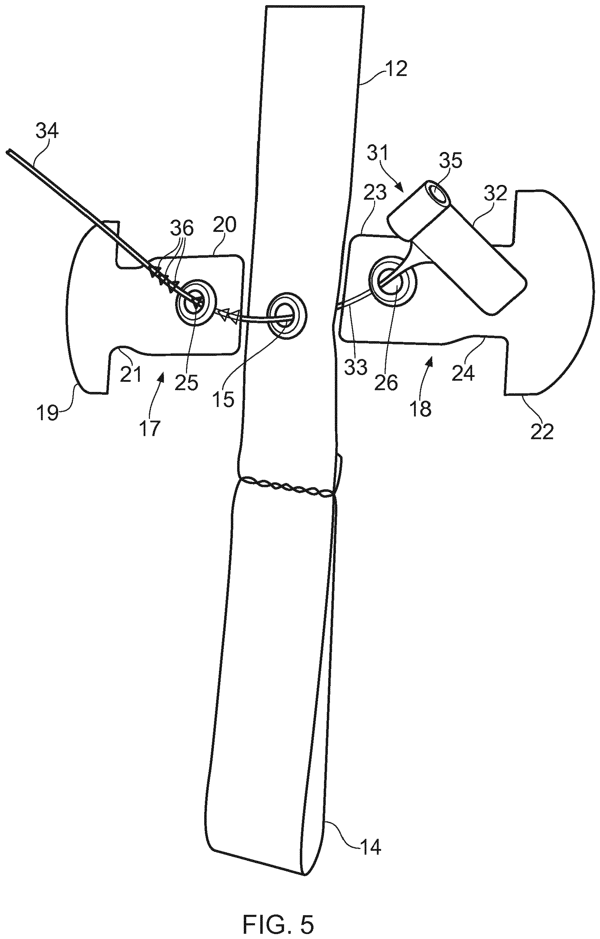

The life vest stowage device 1 has first and second tabs 17, 18. In fact, only one tab 17, 18 is required in order for the life vest stowage device 1 to function, but two tabs 17, 18 are advantageous as they allow the mechanism by which the life vest stowage device 1 is opened to have improved symmetry. As can be seen most clearly in Figure 5, the first tab 17 has a first tab head 19 and a first tab body 20. It also has a first tab neck 21 between the first tab head 19 and the first tab body 20. Similarly, the second tab 18 has a second tab head 22 and a second tab body 23, along with a second tab neck 24 between the second tab head 22 and the second tab body 23. The first tab head 19 is wider than the first tab body 20, which in turn in wider than the first tab neck 21. The second tab head 22 is wider than the second tab body 23, which in turn in wider than the second tab neck 24. Both the first and the second tabs 17, 18 are flat. In this embodiment, they each comprise a sheet of the second material.

A first tab aperture 25 is provided in the first tab 17 and a second tab aperture 26 is provided in the second tab 18. In this embodiment, the first tab aperture 25 is located in the first tab body 20 and the second tab aperture 26 is located in the second tab body 23. The first and second tab apertures 25, 26 are reinforced. In this embodiment, the reinforcement comprises a metal eyelet pressed into each of the first and second tab apertures 25, 26. Other types of reinforcement are used in other embodiments. In yet other embodiments, no reinforcement is provided.

It can be appreciated that, in the illustrated embodiment at least, the first and second tabs 17, 18 are identical to one another. This is not a necessity, but it does have the advantage that the first and second tabs 17, 18 are interchangeable with one another. The life vest stowage device 1 also has first and second tab receiving apertures 27, 28. In this embodiment, the first and second tab receiving apertures 27, 28 are provided in the pocket side wall 7, at locations that are covered by the closure flap 10 in the folded position. However, in other embodiments, the first and second tab receiving apertures 27, 28 are provided elsewhere, for example in the second side wall of the receptacle 2, although it is generally advantageous that the first and second tab receiving apertures 27, 28 are covered by the closure flap 10 in the folded position, wherever they are provided, so as to prevent access to them when the life vest stowage device 1 in the closed configuration.

The first tab head 19 of the first tab 17 is wider than the first tab receiving aperture 27 and the second tab head 22 of the second tab 18 is wider than the second tab receiving aperture 28. The first tab neck 21 of the first tab 17 is narrower than the first tab receiving aperture 27 and the second tab neck 24 of the second tab 18 is narrower than the second tab receiving aperture 28.

The first tab body 20 is slightly wider than the first tab receiving aperture 27, but only to the extent that the first tab body 20 must be deformed in order to pass through the first tab receiving aperture 27. This means that, if the first tab 17 is inserted into the first tab receiving aperture 27 by passing the first tab body 20 through the first tab receiving aperture 27, the first tab 17 tends to lie in the first tab receiving aperture 27 with the first tab neck 21 coincident with the first tab receiving aperture 27. The first tab 17 cannot be pulled all the way through the first tab receiving aperture 27 because of the width of the first tab head 19. Similarly, as the first tab body 20 must be deformed to pass through the first tab receiving aperture 27, the first tab 17 resists passing back out of the first tab receiving aperture 27 from the side via which it was inserted, although it can be extracted if sufficient force is exerted to deform the first tab body 20.

The second tab body 23 is slightly wider than the second tab receiving aperture 28, but only to the extent that the second tab body 23 must be deformed in order to pass through the second tab receiving aperture 28. This means that, if the second tab 18 is inserted into the second tab receiving aperture 28 by passing the second tab body 23 through the second tab receiving aperture 28, the second tab 18 tends to lie in the second tab receiving aperture 28 with the second tab neck 24 coincident with the second tab receiving aperture 28. The second tab 18 cannot be pulled all the way through the second tab receiving aperture 28 because of the width of the second tab head 22. Similarly, as the second tab body 23 must be deformed to pass through the second tab receiving aperture 28, the second tab 18 resists passing back out of the second tab receiving aperture 28 from the side via which it was inserted, although it can be extracted if sufficient force is exerted to deform the second tab body 23.

In this embodiment, the first and second tab heads 19, 20 actually have the same widths as one another, the first and second tab necks 21, 22 have the same widths as one another and the first and second tab receiving apertures 27, 28 have the same widths as one another. However, this is not necessary and the first and second tabs 17, 18 and first and second tab receiving apertures 27, 28 can have different dimensions from one another in other embodiments.

When the closure flap 10 is in the folded position, the closure flap 10 covers the first and second tab receiving apertures 27, 28. Moreover, with the first and second tabs 17, 18 inserted in the first and second tab receiving apertures 27, 28, the first and second tabs 17, 18 are disposed under the closure flap 10. However, the closure flap 10 is arranged to expose the first and second tabs 17, 18, so that they may be accessed from the outwardly facing side of the closure flap 10. This can be achieved by the closure flap 7 having an appropriately positioned hole therethrough. However, in this embodiment, the closure flap 10 has first and second closure flap apertures 29, 30. The first and second closure flap apertures 29, 30 are located to be close to, but offset from, the first and second tab receiving apertures 27, 28.

With the life vest stowage device 1 in the closed configuration, the tab body 20 of the first tab 17 protrudes through the first closure flap aperture 29 and the second tab 18 protrudes through the second closure flap aperture 30. The pull strap 12 passes over the outer surface of the closure flap 10 between first and second closure flap apertures 29, 30, and the pull strap aperture 15 is arranged at a position along the length of the pull strap 12 such that the pull strap aperture 15 is located between the first tab aperture 25 and the second tab aperture 26.

A frangible seal 31 comprises a seal head 32 and an elongate member 33. The elongate member 33 is attached to the seal head 32 at one end. At the other end of the elongate member 33 there is a tip 34 that is insertable into a seal head aperture 35 to form a closed loop. Teeth 36 are provided along the length of the elongate member 33. The teeth 36 cooperate with a pawl (not shown) provided in the seal head aperture 35 to form a ratchet that resists retraction of the elongate member 33 from the seal head aperture 35 from the side of the seal head aperture 35 via which the elongate member 33 is inserted into the seal head aperture 35. Once the ratchet is engaged, the closed loop of the frangible seal 31 is opened by the elongate member 33 breaking.

The frangible seal 31 can take a variety of forms. In this embodiment, the frangible seal 31 is a pull-tight fly seal, as conventionally used in the airline industry for other sealing requirements. The material of the frangible seal 31 is polypropylene or nylon. The force required to break the closed loop of the frangible seal 31 is typically between 40N and 80N. It is more preferably between 60N and 80N, but in one specific example, where the frangible seal 31 is polypropylene, the force is around 48N. The frangible seal 31 is insertable through the pull strap aperture 15 and the first and second tab apertures 25, 26. More specifically, the pull strap aperture 15 and the first and second tab apertures 25, 26 have diameters sufficiently large for the elongate member 33 of the frangible seal 31 to pass through. Moreover, with the life vest stowage device 1 in the closed configuration, the pull strap 12 and the first and second tabs 17, 18 are located close enough to one another that the closed loop of the frangible seal 31 can extend through all of the pull strap aperture 15 and the first and second tab apertures 25, 26 at once. With the frangible seal so located, the pull strap 12 is secured to the first and second tabs 17, 18, with the result that the closure flap 10 is secured to the pocket side wall 7.

A fastener is provided to secure the pull strap 12 in position when the life vest stowage device 1 is in the closed configuration. In this embodiment, the fastener is a hook and loop fastener, such as Velcro®. The fastener comprises a first and second fastener parts 36, 37 provided on opposing sides of the pull strap 12, along with a third fastener part 38 provided on the outwardly facing surface of the portion 8 of the second side wall of the receptacle 2 forming the inner flap pocket 6 and a fourth part 39 located on an inwardly facing surface of the inner flap 5. The first and third fastener parts 36, 38 cooperate with one another to fasten the pull strap 12 to the portion 8 of the second side wall of the receptacle 2 forming the inner flap pocket 6. Similarly, the second and fourth fastener parts 37, 39 cooperate with one another to fasten the pull strap 12 to the inner surface of the inner flap 5. Where the fastener is a hook and loop fastener, typically each pair of fastener parts 36, 37, 38, 39, e.g. the first and third fastener parts 36, 38 and second and fourth fastener parts 37, 39, each comprise one part with hooks and one part with loops. As can be seen best in Figure 3, the third and fourth fastener parts 38, 39 are wider than the pull strap 12 and, in the closed configuration, they come into direct contact with one another either side of the pull strap 12. Preferably, the third and fourth fastener parts 38, 39 are also therefore arranged to fasten to one another, for example with one having hooks and the other having loops.

In use, the life vest 4 is inserted into the receptacle 2 through the receptacle opening 3, with the life vest stowage device 1 in the open configuration. When the life vest stowage device 1 is mounted under an aircraft seat, it is oriented with the second side wall of the receptacle 2, on which the attachment point 13 is provided, at the top and the pull strap 12 tends to hang down across the height of the interior volume of the receptacle 2. As the life vest 4 is inserted into the receptacle 2 it pushes the pull strap 12 towards the back of the receptacle 2. With the life vest 4 fully inserted into the receptacle 2, the pull strap 12 runs from the attachment point 13 towards the rear of the receptacle 2, around the life vest 4, then along the inside surface of the receptacle 2 opposite to the inside surface on which the attachment point 13 is provided, and out through the receptacle opening 3. The length of the pull strap is sufficient that, even in this configuration, the loop 14 is located outside of the receptacle 2.

With the life vest 4 inside the receptacle 2, the life vest stowage device 1 is moved to the closed configuration. Specifically, the inner flap 5 and closure flap 10 are moved to their folded positions so as to obstruct the receptacle opening 3. First, the inner flap 5 is folded along the edge of the inner flap 5 at which it is attached to the receptacle 2. This allows the inner flap 5 to be inserted into the inner flap pocket 6. As the inner flap 5 is inserted into the inner flap pocket 6 it pushes the pull strap 12 ahead of it into the inner flap pocket. The pull handle 12 folds over the edge of the inner flap 5 distal to the receptacle 2. At the same time, the first and third fastener parts 36, 38 come into contact with one another, the second and fourth fastener parts 37, 39 come into contact with one another and the third and fourth fastener parts 38, 39 come into contact with one another.

This causes the pull strap 12 and the inner flap 5 to be retained in the inner flap pocket 6. The first and second tabs 17, 18 are inserted into the first and second tab receiving apertures 27, 28. More specifically, the first tab body 20 is inserted through the first tab receiving aperture 27 in a direction towards the outside of the receptacle 2, which in this embodiment is from the inside of the inner flap pocket 6 to the outwardly facing side of the pocket side wall 7. Likewise, the second tab body 23 is inserted through the second tab receiving aperture 28 in a direction towards the outside of the receptacle 2, which again in this embodiment is from the inside of the inner flap pocket 6 to the outwardly facing side of the pocket side wall 7. The first and second tab heads 19, 22 prevent the first and second tabs 17, 18 passing all the way through the first and second tab receiving holes 27, 28, and the first and second tabs 17, 18 are thus retained in the first and second tab receiving apertures 27, 28.

The closure flap 10 is then moved to its folded position by being folded along the edge of the closure flap 10 by which the closure flap 10 is attached to the receptacle 1. As the closure flap 10 is moved to the folded position, the pull strap 12 folds around the edge of the pocket side wall 7 adjacent the pocket opening 9 so as to extend between the pocket side wall 7 and the closure flap 10. The first and second tab bodies 17, 18 are manipulated so as to extend through the first and second closure flap apertures 29, 30, and the closure flap 10 is manipulated so as to be inserted into the closure flap pockets 11.

Next, the pull strap aperture 15 is aligned with the first and second tab apertures 25, 26 and the elongate member 33 of the frangible seal 31 is threaded through the apertures 15, 25, 26. The frangible seal 31 is then locked by inserting the tip 34 of the elongate member 33 into the head aperture 35 of the frangible seal 31. This secures the life vest stowage device 1 in the closed configuration.

Should a passenger need to retrieve the life vest 4 from the life vest stowage device 1, the passenger pulls the pull strap 12 away from the receptacle 2. This urges the frangible seal 31 to break, allowing the pull strap 12 to be pulled further. Continuing to pull the pull strap 12 moves the closure flap 10 away from the pocket side wall 7 and the closure flap 10 to be removed from the closure flap pockets 11. Continuing to pull the pull strap 12 causes the fastener to unfasten and for the inner flap 5 to be removed from the inner flap pocket 6. The receptacle opening 3 is now unobstructed. Finally, further pulling of the pull strap 12 urges the life vest 4 out of the receptacle 2. The passenger can then grasp the life vest 4 and remove it from the life vest stowage device 1.

The life vest stowage device 1 is described above for use with a frangible seal 31 comprising a pull-tight fly seal. This is useful because such pull-tight fly seals are cheaply available. However, and important advantage of the life vest stowage device 1 is that it can also be used with other types of seals, in particular seals of very different construction to pull-tight fly seals. More particularly, the frangible seal 31 may be a stick-on seal. Such a seal is generally flat.

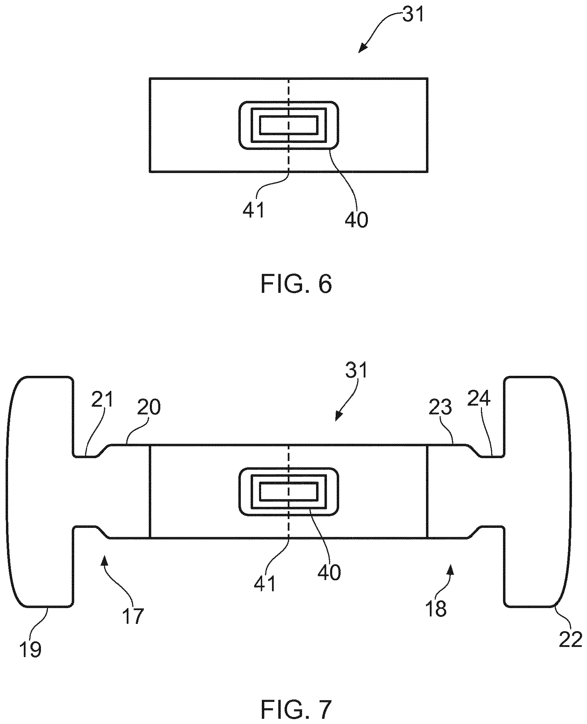

In one particular embodiment, the frangible seal 31 is a Radio-Frequency Identification (RFID) stick-on seal, as shown in Figures 6 and 7. In this embodiment, the frangible seal 31 comprises a stick-on strip incorporating an RFID component 40. A line of weakness bisects the stick-on strip and the RFID component 40, such that pulling the ends of the stick-on strip away from one another causes the frangible seal 31 to break along the line of weakness 41. With the frangible seal broken along the line of weakness, the RFID component 40 ceases to function.

Referring to Figure 7, in this embodiment, with the life vest stowage device 1 in the closed configuration, and the first and second tabs 17, 18 located as described above, the frangible seal 31 is located between the first tab body 20 of the first tab 17 and the second tab body 23 of the second tab 18. This means that the frangible seal extends over the outwardly facing surface of the closure flap 10 between the first tab aperture 25 and the second tab aperture 26. The pull strap 12 is not secured to the first and second tabs 17, 18, but the closure flap 10 is still secured to the pocket side wall 7 just by the frangible seal 31.

When the passenger wishes to retrieve the life vest 4 from the receptacle, the passenger pulls the pull strap 12 as before. However, this time the pull strap 12 causes the frangible seal 31 to break be causing the closure flap 10 to move away from the pocket side wall 7 and the first and second tabs 17, 18 to move apart from one another.

In this way, the life vest stowage device 1 can function in much the same way as the life vest stowage device described in patent publication number WO 2015/145121. Other variations and modifications will be apparent to the skilled person. Such variations and modifications may involve other features which are already known and which may be used instead of, or in addition to, features described herein.

Features that are described in the context of separate embodiments may be provided in combination in a single embodiment. Conversely, features which are described in the context of a single embodiment may also be provided separately or in any suitable sub- combination.

It should be noted that the term "comprising" does not exclude other elements, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present disclosure.

## Claims

1. A life vest stowage device (1) comprising:
a receptacle (2) defining an interior volume;
an opening (3) through which the interior volume is accessible from outside of the receptacle (2);
a first tab (17) having a first tab aperture (25);
a closure flap (10) moveable between an unfolded position when the life vest stowage device (1) is in an open configuration, in which unfolded position the opening (3) is uncovered, and a folded position when the life vest stowage device (1) is in a closed configuration, in which folded position the closure flap (10) at least partially covers the opening (3) and the first tab (17) is exposed through the closure flap (10) to allow access to the first tab aperture (25) from an outer side of the closure flap (10);
a pull strap (12) extending from the interior volume through the opening (3) so as to be able to pass over the outer side of the closure flap (10), the pull strap (12) having a pull strap aperture (15); **characterised in that**,
in the closed configuration, the pull strap (12) is securable to the first tab (17) from the outer side of the closure flap (10) by a frangible seal (31) extending between the pull strap aperture (15) and the first tab aperture (25) such that the closure flap (10) can only be moved to the unfolded position by moving the pull strap aperture (15) and the first tab aperture (25) away from one another so as to break the frangible seal (31).

2. The life vest stowage device according to claim 1, wherein, in the closed configuration, a portion of the pull strap (12) lies between the closure flap (10) and the receptacle (2) such that pulling an end of the pull strap distal from the receptacle (2) away from the receptacle (2) causes the closure flap (10) to move to the unfolded position.

3. The life vest stowage device according to claim 1 or claim 2, wherein the frangible seal (31) comprises a seal head (32) and an elongate member (33), wherein the elongate member (33) cooperates with the seal head (32) to form a closed loop, and wherein breaking the frangible seal (31) involves breaking the closed loop, preferably, wherein the frangible seal (31) is polypropylene or nylon.

4. The life vest stowage device according to claim 3, wherein the elongate member (33) is attached at one end to the seal head (32) and the seal head (32) has a seal head aperture (35) through which the other end of the elongate member (33) can be inserted to form the loop.

5. The life vest stowage device according to claim 4, wherein the elongate member (33) and the seal head aperture (35) form a ratchet arranged such that the elongate member (33) resists withdrawal from the side of the seal head aperture (35) via which it is inserted.

6. The life vest stowage device according to claim 5, wherein the elongate member (33) resists withdrawal from the side of the seal head aperture (35) via which it is inserted sufficiently that the closed loop breaks by the elongate member (33) breaking rather than withdrawing from the seal head aperture (35).

7. The life vest stowage device according to any one of the preceding claims, wherein the closure flap (10) has a first closure flap aperture (29) through which the first tab (17) is exposed in the closed configuration.

8. The life vest stowage device according to any one of the preceding claims, comprising a second tab (18) having a second tab aperture (26), wherein, in the closed configuration, the second tab aperture (26) is exposed through the closure flap (10) to allow access to the second tab aperture (26) from the outer side of the closure flap (10) and the pull strap (12) is securable to the second tab (18) from the outer side of the closure flap (10) by the frangible seal (31) additionally extending between the pull strap aperture (15) and the second tab aperture (26) such that the closure flap (10) can only be moved to the unfolded position by moving the pull strap aperture (15) away from both the first tab aperture (25) and the second tab aperture (26) so as to break the frangible seal (31).

9. The life vest stowage device according to claim 8, wherein the closure flap (10) has a second closure flap aperture (30) through which the second tab (18) is exposed in the closed configuration.

10. The life vest stowage device according to claim 9, the first tab having a tab head wider than the first tab receiving aperture and a neck narrower than the first tab receiving aperture , and the second tab having a tab head wider than the second tab receiving aperture and a neck narrower than the second tab receiving aperture.

11. The life vest stowage device according to any one of claims 8 to 10, wherein, in the closed configuration, the pull strap (12) is locatable between the first tab (17) and the second tab (18).

12. The life vest stowage device of any one of the preceding claims, comprising an inner flap (5) located towards the interior volume of the receptacle (2) inward in relation to the closure flap (10), the inner flap (5) being foldable between the unfolded position when the life vest stowage device (1) is in the open configuration, in which unfolded position the opening (3) is uncovered, and a folded position when the life vest stowage device (1) is in the closed configuration, in which folded position the inner flap (5) at least partially covers the opening (3).

13. The life vest stowage device according to claim 12, wherein the life vest stowage device (1) has a pocket into which the inner flap (5) is insertable in the folded configuration.

14. The life vest stowage device according to any one of the preceding claims, wherein the life vest stowage device (1) has a pocket into which the closure flap (10) is insertable in the folded configuration.

15. The life vest stowage device according to any one of the preceding claims, wherein the life vest stowage device (1) comprises a first material and the closure flap (10) comprises a second material, preferably, wherein the second material is stiffer than the first material and/or preferably wherein the second material is a polycarbonate film.

## Patentansprüche

1. Vorrichtung zum Verstauen von Rettungswesten (1), aufweisend:
einen Behälter (2), der ein Innenvolumen eingrenzt;
eine Öffnung (3), durch die das Innenvolumen von der Außenseite des Behälters (2) zugänglich ist;
eine erste Lasche (17) mit einer ersten Laschenöffnung (25);
eine Verschlussklappe (10), die zwischen einer aufgeklappten Position, wenn sich die Vorrichtung zum Verstauen der Rettungsweste (1) in einer offenen Konfiguration befindet, wobei in der aufgeklappten Position die Öffnung (3) unbedeckt ist, und einer eingeklappten Position bewegbar ist, wenn sich die Vorrichtung zum Verstauen der Rettungsweste (1) in einer geschlossenen Konfiguration befindet, wobei in dieser eingeklappten Position die Verschlussklappe (10) die Öffnung (3) zumindest teilweise bedeckt und die erste Lasche (17) durch die Verschlussklappe (10) hindurch freiliegt, um den Zugang zur ersten Laschenöffnung (25) von einer Außenseite der Verschlussklappe (10) aus zu ermöglichen;
ein Zugband (12), das sich vom Innenvolumen durch die Öffnung (3) erstreckt, so dass es über die Außenseite der Verschlussklappe (10) geführt werden kann, wobei das Zugband (12) eine Zugbandöffnung (15) aufweist; **dadurch gekennzeichnet, dass**
in der geschlossenen Konfiguration, das Zugband (12) an der ersten Lasche (17) von der Außenseite der Verschlussklappe (10) durch eine zerbrechliche Plombe (31) befestigbar ist, das sich zwischen der Zugbandöffnung (15) und der ersten Laschenöffnung (25) erstreckt, so dass die Verschlussklappe (10) nur in die entfaltete Position bewegt werden kann, indem die Zugbandöffnung (15) und die erste Laschenöffnung (25) voneinander weg bewegt werden, um die zerbrechliche Plombe (31) aufzubrechen.

2. Vorrichtung zum Verstauen einer Rettungsweste nach Anspruch 1, wobei in der geschlossenen Konfiguration ein Abschnitt des Zugbandes (12) zwischen der Verschlussklappe (10) und dem Behälter (2) liegt, so dass ein Ziehen an einem Ende des Zugbandes distal vom Behälter (2) weg vom Behälter (2) bewirkt, dass sich die Verschlussklappe (10) in die aufgeklappte Position bewegt.

3. Vorrichtung zum Verstauen einer Rettungsweste nach Anspruch 1 oder Anspruch 2, wobei die zerbrechliche Plombe (31) einen Plombenkopf (32) und ein längliches Element (33) umfasst, wobei das längliche Element (33) mit dem Plombenkopf (32) zusammenwirkt, um eine geschlossene Schleife zu bilden, und wobei ein Aufbrechen der zerbrechlichen Plombe (31) ein Aufbrechen der geschlossenen Schleife beinhaltet, wobei die zerbrechliche Plombe (31) vorzugsweise aus Polypropylen oder Nylon besteht.

4. Vorrichtung zum Verstauen einer Rettungsweste nach Anspruch 3, wobei das längliche Element (33) an einem Ende an dem Plombenkopf (32) befestigt ist und der Plombenkopf (32) eine Plombenkopföffnung (35) aufweist, durch die das andere Ende des länglichen Elements (33) eingeführt werden kann, um die Schleife zu bilden.

5. Vorrichtung zum Verstauen einer Rettungsweste nach Anspruch 4, wobei das längliche Element (33) und die Plombenkopföffnung (35) eine Ratsche bilden, die so angeordnet ist, dass das längliche Element (33) einem Herausziehen von der Seite der Plombenkopföffnung (35), durch die es eingeführt wird, widersteht.

6. Vorrichtung zum Verstauen einer Rettungsweste nach Anspruch 5, wobei das längliche Element (33) dem Herausziehen von der Seite der Plombenkopföffnung (35), durch die es eingeführt wird, ausreichend widersteht, so dass eher die geschlossene Schleife bricht, indem das längliche Element (33) bricht, als dass es sich aus der Plombenkopföffnung (35) herausziehen lässt.

7. Vorrichtung zum Verstauen einer Rettungsweste nach einem der vorangehenden Ansprüche, wobei die Verschlussklappe (10) eine erste Verschlussklappenöffnung (29) aufweist, durch die die erste Lasche (17) in der geschlossenen Konfiguration freiliegt.

8. Vorrichtung zum Verstauen einer Rettungsweste nach einem der vorangehenden Ansprüche, umfassend eine zweite Lasche (18) mit einer zweiten Laschenöffnung (26), wobei in der geschlossenen Konfiguration die zweite Laschenöffnung (26) durch die Verschlussklappe (10) hindurch freigelegt ist, um den Zugang zu der zweiten Laschenöffnung (26) von der Außenseite der Verschlussklappe (10) her zu ermöglichen, und das Zugband (12) an der zweiten Lasche (18) von der Außenseite der Verschlussklappe (10) her durch die zerbrechliche Plombe (31) zusätzlich befestigbar ist, die sich zwischen der Zugbandöffnung (15) und der zweiten Laschenöffnung (26) erstreckt, so dass die Verschlussklappe (10) nur in die aufgeklappte Position bewegt werden kann, indem die Zugbandöffnung (15) sowohl von der ersten Laschenöffnung (25) als auch von der zweiten Laschenöffnung (26) wegbewegt wird, um die zerbrechliche Plombe (31) aufzubrechen.

9. Vorrichtung zum Verstauen einer Rettungsweste nach Anspruch 8, wobei die Verschlussklappe (10) eine zweite Verschlussklappenöffnung (30) aufweist, durch die die zweite Lasche (18) in der geschlossenen Konfiguration freiliegt.

10. Vorrichtung zum Verstauen einer Rettungsweste nach Anspruch 9, wobei die erste Lasche einen Laschenkopf, der breiter ist als die erste Laschenaufnahmeöffnung und einen Hals, der schmaler ist als die erste Laschenaufnahmeöffnung aufweist, und die zweite Lasche einen Laschenkopf, der breiter ist als die zweite Laschenaufnahmeöffnung und einen Hals, der schmaler ist als die zweite Laschenaufnahmeöffnung, aufweist.

11. Vorrichtung zum Verstauen einer Rettungsweste nach einem der Ansprüche 8 bis 10, wobei in der geschlossenen Konfiguration das Zugband (12) zwischen der ersten Lasche (17) und der zweiten Lasche (18) angeordnet werden kann.

12. Vorrichtung zum Verstauen einer Rettungsweste nach einem der vorangehenden Ansprüche, aufweisend eine innere Klappe (5), die in Richtung des Innenvolumens des Behälters (2) nach innen in Bezug auf die Verschlussklappe (10) angeordnet ist, wobei die innere Klappe (5) zwischen der aufgeklappten Position, wenn sich die Vorrichtung zum Verstauen von Rettungswesten (1) in der offenen Konfiguration befindet, wobei in der aufgeklappten Position die Öffnung (3) unbedeckt ist, und einer eingeklappte Position, klappbar ist, wenn sich die Vorrichtung (1) zum Verstauen der Rettungsweste in der geschlossenen Konfiguration befindet, wobei in dieser eingeklappten Position die innere Klappe (5) die Öffnung (3) zumindest teilweise bedeckt.

13. Vorrichtung zum Verstauen einer Rettungsweste nach Anspruch 12, wobei die Vorrichtung zum Verstauen von Rettungswesten (1) eine Tasche aufweist, in die die innere Klappe (5) in der gefalteten Konfiguration einführbar ist.

14. Vorrichtung zum Verstauen einer Rettungsweste nach einem der vorangehenden Ansprüche, wobei die Vorrichtung zum Verstauen von Rettungswesten (1) eine Tasche aufweist, in die die Verschlussklappe (10) in der gefalteten Konfiguration einführbar ist.

15. Vorrichtung zum Verstauen einer Rettungsweste nach einem der vorangehenden Ansprüche, wobei die Vorrichtung zum Verstauen einer Rettungsweste (1) ein erstes Material und die Verschlussklappe (10) ein zweites Material umfasst, wobei vorzugsweise das zweite Material steifer als das erste Material ist und/oder wobei vorzugsweise das zweite Material ein Polycarbonatfilm ist.

## Revendications

1. Dispositif de rangement de gilet de sauvetage (1) comportant :
un réceptacle (2) définissant un volume intérieur ;
une ouverture (3) au travers de laquelle le volume intérieur est accessible depuis l'extérieur du réceptacle (2) ;
une première languette (17) ayant une ouverture de première languette (25) ;
un rabat de fermeture (10) en mesure d'être déplacé entre une position dépliée quand le dispositif de rangement de gilet de sauvetage (1) est dans une configuration ouverte, position dépliée dans laquelle l'ouverture (3) est découverte, et une position pliée quand le dispositif de rangement de gilet de sauvetage (1) est dans une configuration fermée, position pliée dans laquelle le rabat de fermeture (10) recouvre au moins partiellement l'ouverture (3) et la première languette (17) est exposée au travers du rabat de fermeture (10) pour permettre l'accès à l'ouverture de première languette (25) depuis un côté extérieur du rabat de fermeture (10) ;
une sangle à tirer (12) s'étendant depuis le volume intérieur au travers de l'ouverture (3) de manière à pouvoir passer par-dessus le côté extérieur du rabat de fermeture (10), la sangle à tirer (12) ayant une ouverture de sangle à tirer (15) ; **caractérisé en ce que**,
dans la configuration fermée, la sangle à tirer (12) est en mesure d'être assujettie à la première languette (17) depuis le côté extérieur du rabat de fermeture (10) par un joint cassable (31) s'étendant entre l'ouverture de sangle à tirer (15) et l'ouverture de première languette (25) de telle sorte que le rabat de fermeture (10) ne peut être déplacé que jusque sur la position dépliée en déplaçant l'ouverture de sangle à tirer (15) et l'ouverture de première languette (25) à l'opposé l'une de l'autre de manière à rompre le joint cassable (31).

2. Dispositif de rangement de gilet de sauvetage selon la revendication 1, dans lequel, dans la configuration fermée, une partie de la sangle à tirer (12) repose entre le rabat de fermeture (10) et le réceptacle (2) de telle sorte que l'action consistant à tirer sur une extrémité de la sangle à tirer de manière distale par rapport au réceptacle (2) à l'opposé du réceptacle (2) amène le rabat de fermeture (10) à se déplacer jusque sur la position dépliée.

3. Dispositif de rangement de gilet de sauvetage selon la revendication 1 ou la revendication 2, dans lequel le joint cassable (31) comporte une tête de joint (32) et un élément allongé (33), dans lequel l'élément allongé (33) coopère avec la tête de joint (32) pour former une boucle fermée, et dans lequel l'action consistant à rompre le joint cassable (31) occasionne l'action consistant à rompre la boucle fermée, de préférence, dans lequel le joint cassable (31) est du polypropylène ou du nylon.

4. Dispositif de rangement de gilet de sauvetage selon la revendication 3, dans lequel l'élément allongé (33) est attaché à une extrémité de la tête de joint (32) et la tête de joint (32) a une ouverture de tête de joint (35) au travers de laquelle l'autre extrémité de l'élément allongé (33) peut être insérée pour former la boucle.

5. Dispositif de rangement de gilet de sauvetage selon la revendication 4, dans lequel l'élément allongé (33) et l'ouverture de tête de joint (35) forment un rochet agencé de telle sorte que l'élément allongé (33) résiste à tout retrait depuis le côté de l'ouverture de tête de joint (35) par le biais de laquelle il est inséré.

6. Dispositif de rangement de gilet de sauvetage selon la revendication 5, dans lequel l'élément allongé (33) résiste à tout retrait depuis le côté de l'ouverture de tête de joint (35) par le biais de laquelle il est inséré suffisamment de telle sorte que la boucle fermée se rompt par l'élément allongé (33) qui se rompt plutôt que se retire de l'ouverture de tête de joint (35).

7. Dispositif de rangement de gilet de sauvetage selon l'une quelconque des revendications précédentes, dans lequel le rabat de fermeture (10) a une première ouverture de rabat de fermeture (29) au travers de laquelle la première languette (17) est exposée dans la configuration fermée.

8. Dispositif de rangement de gilet de sauvetage selon l'une quelconque des revendications précédentes, comportant une deuxième languette (18) ayant une ouverture de deuxième languette (26), dans lequel, dans la configuration fermée, l'ouverture de deuxième languette (26) est exposée au travers du rabat de fermeture (10) pour permettre l'accès à l'ouverture de deuxième languette (26) depuis le côté extérieur du rabat de fermeture (10) et la sangle à tirer (12) est en mesure d'être assujettie à la deuxième languette (18) depuis le côté extérieur du rabat de fermeture (10) par le joint cassable (31) s'étendant de plus entre l'ouverture de sangle à tirer (15) et l'ouverture de deuxième languette (26) de telle sorte que le rabat de fermeture (10) ne peut être déplacé que jusque sur la position dépliée en déplaçant l'ouverture de sangle à tirer (15) à l'opposé à la fois de l'ouverture de première languette (25) et de l'ouverture de deuxième languette (26) de manière à rompre le joint cassable (31).

9. Dispositif de rangement de gilet de sauvetage selon la revendication 8, dans lequel le rabat de fermeture (10) a une deuxième ouverture de rabat de fermeture (30) au travers de laquelle la deuxième languette (18) est exposée dans la configuration fermée.

10. Dispositif de rangement de gilet de sauvetage selon la revendication 9, la première languette ayant une tête de languette plus large par rapport à l'ouverture de réception de première languette et une encolure plus étroite par rapport à l'ouverture de réception de première languette, et la deuxième languette ayant une tête de languette plus large par rapport à l'ouverture de réception de deuxième languette et une encolure plus étroite par rapport à l'ouverture de réception de deuxième languette.

11. Dispositif de rangement de gilet de sauvetage selon l'une quelconque des revendications 8 à 10, dans lequel, dans la configuration fermée, la sangle à tirer (12) est en mesure d'être localisée entre la première languette (17) et la deuxième languette (18).

12. Dispositif de rangement de gilet de sauvetage selon l'une quelconque des revendications précédentes, comportant un rabat intérieur (5) situé vers le volume intérieur du réceptacle (2) vers l'intérieur par rapport au rabat de fermeture (10), le rabat intérieur (5) étant en mesure d'être plié entre la position dépliée quand le dispositif de rangement de gilet de sauvetage (1) est dans la configuration ouverte, position dépliée dans laquelle l'ouverture (3) est découverte, et une position pliée quand le dispositif de rangement de gilet de sauvetage (1) est dans la configuration fermée, position pliée dans laquelle le rabat intérieur (5) recouvre au moins partiellement l'ouverture (3).

13. Dispositif de rangement de gilet de sauvetage selon la revendication 12, dans lequel le dispositif de rangement de gilet de sauvetage (1) a une poche dans laquelle le rabat intérieur (5) est en mesure d'être inséré dans la configuration pliée.

14. Dispositif de rangement de gilet de sauvetage selon l'une quelconque des revendications précédentes, dans lequel le dispositif de rangement de gilet de sauvetage (1) a une poche dans laquelle le rabat de fermeture (10) est en mesure d'être inséré dans la configuration pliée.

15. Dispositif de rangement de gilet de sauvetage selon l'une quelconque des revendications précédentes, dans lequel le dispositif de rangement de gilet de sauvetage (1) comporte un premier matériau et le rabat de fermeture (10) comporte un deuxième matériau, de préférence, dans lequel le deuxième matériau est plus rigide que le premier matériau et/ou de préférence dans lequel le deuxième matériau est un film de polycarbonate.
